# EUROPÄISCHE PATENTSCHRIFT

(11) **EP 1 612 125 B1**
(45) Veröffentlichungstag und Bekanntmachung des Hinweises auf die Patenterteilung: **04.06.2008**
(21) Anmeldenummer: 05104746.2
(22) Anmeldetag: 01.06.2005
(51) Int. Cl.: B62D 15/02

(54) **Spurwechselassistent für Kraftfahrzeuge**
Lane-change assistant for motor vehicles
Dispositif d'assistance au changement de voie pour véhicules

(30) Priorität: 01.07.2004 DE 102004031771
(43) Veröffentlichungstag der Anmeldung: 04.01.2006
(73) Patentinhaber: ROBERT BOSCH GMBH, 70442 Stuttgart (DE)
(72) Erfinder: Hoetzer, Dieter, 71706, Markgroenningen (DE)

(56) Entgegenhaltungen:
- DE-C1- 19 921 449

## Beschreibung

### Stand der Technik

Die Erfindung betrifft einen Spurwechselassistenten für Kraftfahrzeuge, mit einer Ortungseinrichtung zur Überwachung des rückwärtigen Verkehrs, einer Bewertungseinrichtung zur Bewertung der Relevanz der georteten Objekte auf Grund einer Zuordnung zu verschiedenen Spuren der Fahrbahn, einer Sensoreinrichtung zur Erfassung von dynamischen Daten des eigenen Fahrzeugs und einer Berechnungseinrichtung zur Berechnung des Fahrbahnverlaufs anhand von Daten der Sensoreinrichtung.

Für Kraftfahrzeuge sind Fahrerassistenzsysteme bekannt, die den Fahrer bei der Führung des Fahrzeugs unterstützen. Ein Beispiel eines solchen Assistenzsystems ist ein sogenanntes ACC-System (Adaptive Cruise Control), bei dem mit einer Ortungseinrichtung, z.B. mit einem winkelauflösenden Radarsensor, vorausfahrende Fahrzeuge geortet werden und die Geschwindigkeit des eigenen Fahrzeugs dann automatisch so angepaßt wird, daß das unmittelbar auf der eigenen Fahrspur vorausfahrende Fahrzeug in einem angemessenen Abstand verfolgt wird. Zur Unterscheidung zwischen Fahrzeugen auf der eigenen Fahrspur und Fahrzeugen auf den Nebenspuren kann auf die Richtungsdaten des Radarsensors zurückgegriffen werden. Dabei ist allerdings eine eventuelle Fahrbahnkrümmung zu berücksichtigen. Der voraussichtliche Verlauf der Fahrbahn wird deshalb zumeist anhand von fahrdynamischen Daten des eigenen Fahrzeugs abgeschätzt, beispielsweise anhand des Lenkeinschlags, der Querbeschleunigung, der Gierrate, einer Drehzahldifferenz zwischen den linken und rechten Rädern des Fahrzeugs und dergleichen.

Spurwechselassistenten sind eine spezielle Form von Assistenzsystemen, die häufig in Kombination mit einem ACC-System eingesetzt werden und den Fahrer etwa vor einem Überholvorgang bei der Entscheidung unterstützen sollen, ob ein gefahrloser Spurwechsel möglich ist. Dazu ist eine Ortungseinrichtung erforderlich, die den rückwärtigen Verkehr überwacht. Für die Relevanzbewertung ist auch in diesem Fall eine Spurzuordnung erforderlich. Relevant sind insbesondere Fahrzeuge, die sich auf der Nebenspur befinden, auf die der Fahrer des eigenen Fahrzeugs wechseln will. Wenn beispielsweise der Fahrer durch Setzen des linken Fahrtrichtungsanzeigers einen Überholwunsch zu erkennen gibt, und die Ortungseinrichtung feststellt, daß sich auf der linken Nebenspur ein überholendes Fahrzeug mit hoher Geschwindigkeit annähert, so daß bei einem Spurwechsel eine Kollisionsgefahr bestünde, so wird ein Warnhinweis an den Fahrer ausgegeben, beispielsweise mit Hilfe einer optischen Anzeigeeinrichtung, die in den linken Außenspiegel integriert ist.

Beispiele für Spurwechselassistenten und die zugehörige Sensorik werden beschrieben in DE 40 05 444 A1, DE 35 00 152 A1, DE 296 20 357 U1, DE 43 13 568 C1, DE 195 26 452 C1, US 6 400 308 B1 und DE 199 21 449 C1.

DE 19 921 449 C1 offenbart ein Spurwechselassistent gemäß dem Oberbegriff des Anspruchs 1.

### Vorteile der Erfindung

Die Erfindung mit den in Anspruch 1 angegebenen Merkmalen bietet den Vorteil, daß sie im Rahmen der Spurwechselassistenzfunktion eine höhere Genauigkeit und Verläßlichkeit bei der Relevanzbewertung ermöglicht. Dabei nutzt die Erfindung den Umstand aus, daß der Fahrbahnabschnitt, auf dem sich die georteten nachfolgenden Fahrzeuge befinden, unmittelbar zuvor von dem eigenen Fahrzeug durchfahren wurde, so daß der Fahrbahnverlauf für diesen Abschnitt nicht abgeschätzt zu werden braucht, sondern anhand der gemessenen fahrdynamischen Daten präzise bestimmt werden kann. Erfindungsgemäß erfolgt daher eine genaue und verläßliche Spurzuordnung und Relevanzbewertung der nachfolgenden Fahrzeuge auf der Grundlage des genau bekannten Fahrbahnverlaufes.

Vorteilhafte Weiterbildungen und Ausgestaltungen der Erfindung ergeben sich aus den Unteransprüchen.

Zur Bestimmung des Fahrbahnverlaufes und speziell der Fahrbahnkrümmung können verschiedene dynamische Daten des eigenen Fahrzeugs herangezogen und in ihrer zeitlichen Entwicklung verfolgt werden, z.B. der Lenkeinschlag, die Raddrehzahldifferenz zwischen linken und rechten Fahrzeugrädern, die mit Hilfe eines speziellen Sensors gemessene Gierrate oder Gierbeschleunigung, die Querschleunigung in Kombination mit der Längsgeschwindigkeit des Fahrzeugs und dergleichen. Wenn auf diese Weise die Fahrbahnkrümmung in regelmäßigen Zeit- oder Wegintervallen bestimmt wird, ist es möglich, den Fahrbahnverlauf in einem geeigneten Koordinatensystem, etwa einem fahrzeugfesten Koordinatensystem, durch eine Folge von Kurvenstücken zu repräsentieren, die jeweils die gemessene Krümmung aufweisen. Es ist jedoch auch eine komplexere Darstellung des Fahrbahnverlaufes mit Hilfe von Polynomfunktionen, Spline-Funktionen und dergleichen möglich. Alternativ ist auch die Speicherung der Koordinaten einer Folge von Punkten auf der Fahrbahn in Tabellenform möglich.

Vorzugsweise wird der so bestimmte Fahrbahnverlauf in einer Speichereinrichtung abgelegt, und zwar vorzugsweise für eine zurückgelegte Wegstrecke, die mindestens der Ortungstiefe der Ortungseinrichtung entspricht. Die Daten in der Speichereinrichtung werden fortlaufend aktualisiert, wobei jeweils die am weitesten zurückliegenden Daten gelöscht werden. Da somit der Fahrbahnverlauf jeweils für den gesamten Ortungsbereich des Ortungssystems bekannt ist, läßt sich für jedes Fahrzeug zuverlässig entscheiden, auf welcher Fahrspur es sich befindet.

Wahlweise können zur Bestimmung des Fahrbahnverlaufes auch die Daten eines Navigationssystems herangezogen werden, beispielsweise durch Speicherung der von einem GPS-System gelieferten Koordinaten in konstanten Zeit- oder Wegintervallen. Gegebenenfalls kann der Fahrbahnverlauf auch anhand einer im Navigationssystem gespeicherten Routenkarte bestimmt werden. Da jedoch die räumliche Auflösung der heute verfügbaren Routenkarten nur begrenzt ist und auch die Ortungsgenauigkeit der bisher verfügbaren GPS-Systeme nur begrenzt ist, erscheint es als zweckmäßig, die vom Navigationssystem gelieferten Daten zusätzlich mit der auf andere Weise gemessenen Fahrbahnkrümmung abzugleichen.

Unter Umständen kann die Aufzeichnung des Fahrbahnverlaufes dadurch verfälscht werden, daß das eigene Fahrzeug einen Spurwechsel vornimmt. In einer vorteilhaften Ausführungsform werden deshalb Spurwechselvorgänge des eigenen Fahrzeugs detektiert, beispielsweise anhand des Zustands des Fahrtrichtungsanzeigers und/oder anhand charakteristischer Änderungen der Richtungswinkel von georteten Fahrzeugen, und der aufgezeichnete Fahrbahnverlauf wird rückwirkend entsprechend dem erkannten Spurwechsel korrigiert. Dies kann z.B. dadurch geschehen, daß die während des Spurwechsels aufgezeichneten Daten für die Fahrbahnkrümmung gelöscht und durch eine Interpolation der vorher und nachher aufgenommenen Daten ersetzt werden, oder daß, z.B. bei punktweiser Aufzeichnung von Ortskoordinaten, die Koordinaten jeweils um einen der Spurbreite entsprechenden Querversatz korrigiert werden.

Im folgenden wird ein Ausführungsbeispiel der Erfindung anhand der Zeichnung näher erläutert.

Es zeigen:
- Figur 1: ein Blockdiagramm eines Spurwechselassistenten; und
- Figur 2: eine Skizze zur Erläuterung der Wirkungsweise des Spurwechselassistenten.

### Beschreibung des Ausführungsbeispiels

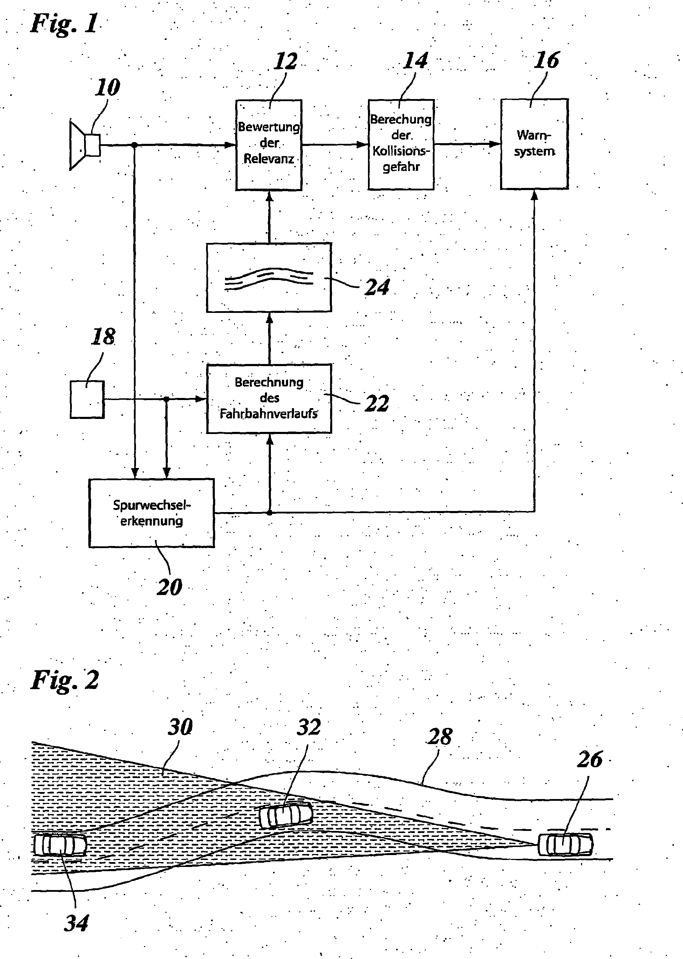

Der in Figur 1 gezeigte Spurwechselassistenz umfaßt eine Ortungseinrichtung 10, beispielsweise in der Form eines winkelauflösenden Radarsensos mit einer Ortungsreichweite von etwa 120 m und einem Öffnungswinkel von ±8°, der an der Rückfront des Kraftfahrzeugs angebracht ist und den Rückraum des Fahrzeugs überwacht. Die Ortungsdaten der Ortungseinrichtung 10, also Abstands-, Relativgeschwindigkeits- und Winkeldaten, werden an eine Bewertungseinrichtung 12 übermittelt, die die Relevanz der georteten Objekte bewertet. Dabei werden zunächst stehende Objekte, bei denen die Relativgeschwindigkeit gleich der Geschwindigkeit des eigenen Fahrzeugs ist, verworfen. Bei den verbleibenden beweglichen Objekten wird es sich in der Regel um nachfolgende Fahrzeuge handeln. Für diese Fahrzeuge wird anhand der Richtungsdaten festgestellt, auf welcher Fahrspur der Fahrbahn sie sich mit größter Wahrscheinlichkeit befinden. In Ländern mit Rechtsverkehr wird Fahrzeugen, die sich in Bezug auf die vom eigenen Fahrzeug befahrene Spur auf der unmittelbar angrenzenden linken Nebenspur befinden, die höchste Relevanz zugewiesen, während Fahrzeuge auf der eigenen Spur allenfalls dann relevant sein können, wenn sie sich mit sehr hoher Geschwindigkeit annähern, so daß mit einem unmittelbar bevorstehenden Spurwechsel des nachfolgenden Fahrzeugs zu rechnen ist.

Die Ortungsdaten der als relevant eingestuften Fahrzeuge werden dann an eine Berechnungseinrichtung 14 weitergeleitet, die für jedes dieser Fahrzeuge anhand der Relativgeschwindigkeit und des Abstands die Kollisionsgefahr berechnet, die sich ergäbe, wenn das eigene Fahrzeug zum aktuellen Zeitpunkt einen Spurwechsel auf die Nebenspur vornähme. Sofern mindestens ein Fahrzeug festgestellt wird, für das die Kollisionsgefahr oberhalb eines bestimmten Schwellenwertes liegt, wird über ein Warnsystem 16 eine Warnmeldung ausgegeben. Das Warnsystem kann z.B. in einer optischen Anzeigeeinrichtung bestehen, die in den linken Außenspiegel integriert ist, so daß der Fahrer eine entsprechende Warnung erhält, wenn er zur Vorbereitung des Spurwechsels in den Außenspiegel blickt.

Der Spurwechselassistent erhält außerdem Informationen von einer Sensoreinrichtung 18, die verschiedene Daten des eigenen Fahrzeugs erfaßt. Beispielsweise kann die Sensoreinrichtung 18 einen Gierratensensor aufweisen, mit dem die aktuelle Gierrate des eigenen Fahrzeugs gemessen wird. Weiterhin gehört zu der Sensoreinrichtung 18 ein Geschwindigkeitssensor, der die Geschwindigkeit des eigenen Fahrzeugs mißt, sowie ein Sensor, der den Zustand des Fahrtrichtungsanzeigers angibt. Eine Erkennungseinrichtung 20 erkennt beispielsweise anhand des Zustands des Fahrtrichtungsanzeigers eine Spurwechselabsicht des Fahrers und gibt ein Spurwechselsignal an das Warnsystem 16 aus. Falls bei Ausgabe dieses Spurwechselsignals Kollisionsgefahr besteht, veranlaßt das Warnsystem eine nachdrücklichere Warnung, etwa in der Form eines akustischen Signals.

Die Signale der Sensoreinrichtung 18, insbesondere die Signale des Gierrastensensors und des Geschwindigkeitssensors, werden einer Berechnungseinrichtung 22 zugeführt, die daraus die aktuelle Fahrbahnkrümmung und ein Modell des Fahrbahnverlaufs in dem derzeit gefahrenen Fahrbahnabschnitt berechnet. In einer Speichereinrichtung 24 wird der so berechnete Fahrbahnverlauf für die unmittelbar zurückliegende Wegstrecke gespeichert und fortlaufend aktualisiert. Die Wegstrecke, für die der Fahrbahnverlauf gespeichert wird, beträgt im gezeigten Beispiel mindestens 120 m und entspricht damit der Ortungstiefe der Ortungseinrichtung 10.

Die gespeicherte Information über den Fahrbahnverlauf wird der Bewertungseinrichtung 12 bereitgestellt, die auch die Abstands- und Richtungsdaten der georteten Fahrzeuge erhält und somit in der Lage ist, anhand des bekannten Fahrbahnverlaufs für jedes Fahrzeug zu entscheiden, ob es sich auf der von dem eigenen Fahrzeug befahrenen Fahrspur oder auf der linken Nebenspur oder auf einer anderen Nebenspur befindet. Auf diese Weise läßt sich die Relevanzbewertung mit hoher Verläßlichkeit durchführen.

Wenn die Erkennungseinrichtung 20 eine Spurwechselabsicht des Fahrers des eigenen Fahrzeugs erkennt, so wird auch die Berechnungseinrichtung 22 über die Spurwechselabsicht informiert, damit die Aufzeichnung des Fahrbahnverlaufes nicht durch den Spurwechsel verfälscht wird. Vorzugsweise ist die Erkennungseinrichtung 20 so ausgebildet, daß sie anhand charakteristischer Muster von Lenkbewegungen und/oder anhand von Daten der Ortungseinrichtung 10 auch den tatsächlichen Vollzug des Spurwechsels erkennen kann. Wenn z.B. der Spurwechselassistent in Kombination mit einem ACC-System eingesetzt wird, so weist das ACC-System einen weiteren Radarsensor auf, mit dem das Vorfeld des Fahrzeugs überwacht wird. Wenn der Fahrer des eigenen Fahrzeugs einen Spurwechsel vornimmt, so führt die Querbewegung des eigenen Fahrzeugs zu einer gleichzeitigen Änderung der Richtungswinkel der vor und hinter dem eigenen Fahrzeug georteten Fahrzeuge in einer charakteristischen, vom jeweiligen Abstand abhängigen Weise. Dieser Effekt kann dazu genutzt werden, Beginn und Ende des Spurwechselvorgangs zu erkennen und den berechneten und aufgezeichneten Fahrbahnlauf entsprechend zu korrigieren.

In Figur 2 wird die Funktionsweise des Spurwechselassistenten anhand einer Beispielsituation illustriert. Das mit dem Spurwechselassistenten ausgerüstete Fahrzeug 26 fährt auf der rechten Spur einer zweispurigen Fahrbahn 28. Der Ortungsbereich 30 der Ortungseinrichtung 10 ist schraffiert dargestellt. Auf das Fahrzeug 26 folgen ein Fahrzeug 32, das ebenfalls auf der rechten Spur fährt, sowie ein Fahrzeug 34 auf der Nebenspur. Wenn das Fahrzeug 34 eine deutlich höhere Geschwindigkeit hat als das Fahrzeug 26, so ist es für einen etwaigen Spurwechselvorgang des Fahrzeugs 26 relevant, während das ebenfalls auf der rechten Spur fahrende Fahrzeug 32 durch einen solchen Spurwechselvorgang nicht behindert würde.

Aufgrund des gekrümmten Verlaufes der Fahrbahn 28 befindet sich jedoch im gezeigten Beispiel das irrelevante Fahrzeug 32 in Fahrtrichtung gesehen links von dem relevanten Fahrzeug 34. Wenn das Fahrzeug 32 die gleiche Absolutgeschwindigkeit hat wie das Fahrzeug 26, so daß von dem Fahrzeug 32 keine Kollisionsgefahr ausgeht, würde somit ohne Berücksichtigung der Fahrbahnkrümmung die an sich notwendige Warnung unterbleiben. Da jedoch der in Figur 2 gezeigte Verlauf der Fahrbahn 28 in der Speichereinrichtung 24 präsent ist, kann die Bewertungseinrichtung 12 die Fahrzeuge 32 und 34 den Spuren der Fahrbahn 28 korrekt zuordnen, so daß eine hohe Funktionssicherheit des Spurwechselassistenten gewährleistet ist.

Aufgrund der Aufzeichnung und Speicherung des Fahrbahnverlaufes ist das System auch in der Lage, Situationen zu erkennen, in denen, etwa beim Durchfahren einer engen Kurve, der Ortungsbereich 30 des Radarsensors die linke Nebenspur nur innerhalb eines sehr kleinen Abstandsbereiches überstreicht, so daß die Ortungseinrichtung für Fahrzeuge blind ist, die sich in einem größeren Abstand auf der linken Nebenspur befinden aber aufgrund ihrer hohen Geschwindigkeit gleichwohl relevant wären. In diesen Situationen kann über das Warnsystem 16 vorbeugend eine Warnung ausgegeben werden.

Die Berechnungsfunktionen des Spurwechselassisten können in der Praxis von einem Rechnersystem ausgeführt werden, in dem die Bewertungseinrichtung 12, die Berechnungseinrichtungen 14 und 22 und die Erkennungseinrichtung 20 als Softwaremodule implementiert sind.

## Patentansprüche

1. Spurwechselassistent für Kraftfahrzeuge, mit einer Ortungseinrichtung (10, 30) zur Überwachung des rückwärtigen Verkehrs, einem Ortungssystem zur adaptiven Abstands- und Geschwindigkeitsregelung, das das Vorfeld des Fahrzeugs überwacht, einer Bewertungseinrichtung (12) zur Bewertung der Relevanz der georteten Objekte auf Grund einer Zuordnung zu verschiedenen Spuren der Fahrbahn (28), einer Sensoreinrichtung (18) zur Erfassung von dynamischen Daten des eigenen Fahrzeugs (26) und einer Berechnungseinrichtung (22) zur Berechnung des Fahrbahnverlaufs anhand von Daten der Sensoreinrichtung, wobei die Bewertungseinrichtung (12) dazu ausgebildet ist, die Spurzuordnung auf der Grundlage des berechneten Fahrbahnverlaufs für eine unmittelbar zurückliegende Wegstrecke vorzunehmen, **dadurch gekennzeichnet, dass** der Beginn und das Ende eines Spurwechsels des eigenen Fahrzeugs erkannt wird, indem eine gleichzeitige Änderung der Richtungswinkel der vor und hinter dem eigenen Fahrzeug georteten Objekte erkannt wird.

2. Spurwechselassistent nach Anspruch 1, **gekennzeichnet durch** eine Speichereinrichtung (24) zur Speicherung des von der Berechnungseinrichtung (22) berechneten Fahrbahnverlaufs für eine Wegstrecke, deren Länge der Reichweite der Ortungseinrichtung (10, 30) entspricht.

3. Spurwechselassistent nach Anspruch 1 öder 2, **dadurch gekennzeichnet, daß** eine Erkennungseinrichtung (20) zur Erkennung eines Spurwechsels des eigenen Fahrzeugs (26) vorhanden ist und daß die Berechnungseinrichtung (22) dazu ausgebildet ist, den berechneten Fahrbahnverlauf anhand von Daten der Erkennungseinrichtung (20) entsprechend dem Spurwechsel zu korrigieren.

## Claims

1. Lane-change assistant for motor vehicles, having a locating device (10, 30) for monitoring the traffic behind, a locating system for adaptive inter-vehicle distance and cruise control which monitors the area in front of the vehicle, an evaluation device (12) for evaluating the relevance of the located objects on the basis of an assignment to various lanes of the carriageway (28), a sensor device (18) for acquiring dynamic data on the driver's own vehicle (26) and a calculation device (22) for calculating the profile of the carriageway by means of data from the sensor device, wherein the evaluation device (12) is designed to perform the lane assignment on the basis of the calculated profile of the carriageway for a directly preceding section of the route, **characterized in that** the start and the end of a lane change of the driver's own vehicle is detected by detecting a simultaneous change in the angle of direction of the objects located in front of the driver's own vehicle and the objects located behind the driver's own vehicle.

2. Lane-change assistant according to Claim 1, **characterized by** a memory device (24) for storing the profile of the carriageway, calculated by the calculation device (22), for a section of the route whose length corresponds to the range of the locating device (10, 30).

3. Lane-change assistant according to Claim 1 or 2, **characterized in that** a detection device (20) for detecting a lane change of the driver's own vehicle (26) is provided, and **in that** the calculation device (22) is designed to correct the calculated profile of the carriageway in accordance with the lane change by means of data from the detection device (20).

## Revendications

1. Dispositif d'assistance aux changements de voie pour des véhicules automobiles comportant une installation de localisation (10, 30) pour surveiller la circulation arrière, un système de localisation pour la régulation adaptative de la distance et de la vitesse qui surveille le champ avant du véhicule, une installation d'évaluation (12) pour évaluer le caractère déterminant des objets localisés sur la base d'une association à différentes voies de la chaussée de circulation (28), une installation de capteurs (18) pour saisir les données dynamiques propre du véhicule (26) et une installation de calcul (22) pour calculer le tracé de la voie de circulation à l'aide des données de l'installation de capteurs,
l'installation d'évaluation (12) étant réalisée pour assurer l'association de la voie sur le fondement du tracé calculé de la chaussée pour le tracé qui vient directement d'être effectué,
**caractérisé en ce qu'**
on reconnaît le début et la fin d'un changement de voie par le propre véhicule **en ce que** l'on détecte simultanément une variation de l'angle de direction des objets situés à l'avant et à l'arrière du propre véhicule.

2. Dispositif d'assistance aux changements de voie selon la revendication 1,
**caractérisé par**
une installation de mémoire (24) pour enregistrer en mémoire le tracé de la chaussée de circulation calculée par l'installation de calcul (22) pour un trajet dont la longueur correspond à la portée de l'installation de localisation (10, 30).

3. Dispositif d'assistance aux changements de voie selon la revendication 1 ou 2,
**caractérisé par**
une installation de reconnaissance (20) pour reconnaître un changement de voie du propre véhicule (26) et l'installation de calculs (22) est réalisée pour corriger le tracé calculé de la chaussée à l'aide des données de l'installation de reconnaissance (20) en fonction du changement de voie.
